# EUROPEAN PATENT SPECIFICATION

(11) **EP 3 286 948 B1**
(45) Date of publication and mention of the grant of the patent: **06.03.2019**
(21) Application number: 16713799.1
(22) Date of filing: 22.03.2016
(51) Int. Cl.: H04W 24/02, H04W 60/00

(54) **MAINTENANCE OF LOCAL AREA/TRACKING AREA MAPPINGS**
WARTUNG VON ABBILDUNGEN VON LOKALEN BEREICHEN/VERFOLGUNGSBEREICHEN
MAINTENANCE DE CARTOGRAPHIE DE ZONE LOCALE/ZONE DE POURSUITE

(30) Priority: 21.04.2015 EP 15275122
(43) Date of publication of application: 28.02.2018
(73) Proprietor: British Telecommunications public limited company, London EC1A 7AJ (GB)
(72) Inventor: CUEVAS RAMIREZ, Maria, London EC1A 7AJ (GB)
(74) Representative: British Telecommunications public limited company Intellectual Property Department
(86) International application number: PCT/EP2016/056282
(87) International publication number: WO 2016/169713

(56) References cited:
- WO-A1-2011/158663
- US-A1- 2010 080 171
- HUAWEI: "Performance of CS fallback", 3GPP DRAFT; R2-082211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080429, 29 April 2008 (2008-04-29), XP050139982,

## Description

This invention relates to mobile cellular telephony, and in particular to the maintenance of tracking and location area mappings needed by a network control system to support a dual attachment process.

The 3GPP draft paper "Performance of CS Fallback" (vol RAN WG2, 29 April 2008) describes a location area update procedure for maintain correct Tracking Area/Location Area (TA/LA) mappings needed by the network to support the dual attachment process required for Circuit Switched Fallback.. As user-provided microcells (femtocells) become more common, whose locations are more dynamic than traditional fixed base stations, maintaining a mapping table is becoming more difficult. This invention provides a mechanism to update the TA/LA mapping table in real-time based on the information obtained by user terminals, which is passed on to the base stations and thus to the network management system. The present invention extends the interface between a base station and the network to be able to use neighbour cell information to perform such an update procedure automatically.

The dual attachment process enables a user terminal to be associated with two networks simultaneously, and is useful to support the operation of a multi-function terminal, for which different functions are best served by different networks. For example, circuit-switched networks are optimised for latency rather than accuracy (data loss) and can result in unacceptable error rates when used for data. It is also inefficient to keep a circuit occupied for a data session, as data sessions only require data to be transmitted intermittently.

Some user equipment (UE) terminal devices are equipped to carry voice calls over the digital network (a technology known as "VoLTE" - Voice-over-LTE systems), but many existing user terminal devices do not have this capability. Circuit Switched FallBack (CSFB), as specified in the Third Generation Partnership Project (3GPP), standard TS23.272 sections 7.5 and 7.5a, is such a technology, whereby when a dual-mode user equipment is connected to a packet-based all-IP network such as "4G" (also known as "Long Term Evolution (LTE)) that cannot support circuit-switched calls, data services are connected through a packet-switched network, but voice services are connected through a circuit-switched network whilst. When such a non-VoLTE device is used to make or receive a voice call or text message, the device "falls back" to the earlier-generation "3G" or "2G" Universal Terrestrial Radio Access Network (UTRAN) circuit-switched network to complete the call or to deliver the "SMS" text message. In order to allow different types of traffic to be routed to a mobile terminal by these different technologies, the device has to have an attachment recorded in both networks.

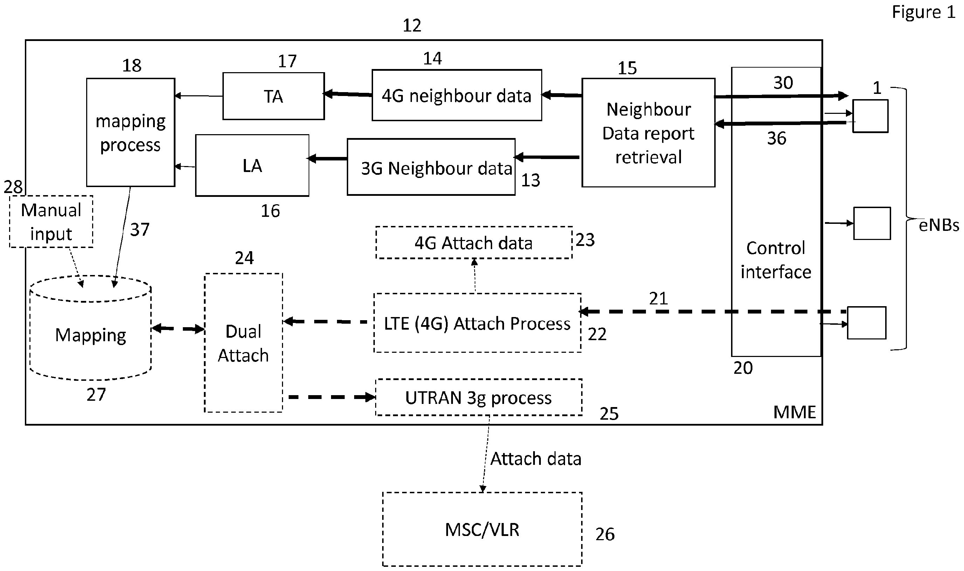

In the Third Generation Partnership Project (3GPP), standard TS23.272, section 5.2 para 3, this fallback procedure is enabled by arranging that when users attach to a 4G network, the Attach Request message includes an Attach Type indicating that the User Equipment requests a dual attachment of both its 4G "EPS" (evolved packet system) identity and its 2G/3G "IMSI" (International Mobile Subscriber Identity). As shown by the dashed lines in Figure 1 *which will be discussed in more detail later), when an attach request 21 is received by the mobility management entity 12 from a terminal on connection to the network, an attachment process 22 validates and executes the request, and stores data relating to the terminal in a store 23. Handovers and routing of incoming communications traffic are handled by grouping base stations together in geographical areas, known in LTE (Long Term Evolution, or 4G) systems as Tracking areas (TA). The mobile management entity (MME) controlling the process allocates a Tracking Area Identity matched against the 4G evolved packet core (EPC), and this is recorded in the attach data store 23, and is also communicated to a home subscriber server (HSS) which records the network location of the user equipment.

In earlier systems such as UTRAN (Universal Terrestrial Radio Access Network or "3G"), base stations are also grouped in geographical areas, which are known as Location areas (LAs). If a dual attachment is required, a dual attachment process 24 initiates a UTRAN attach process 25, which allocates a separate International Mobile Subscriber Identity (IMSI) attachment to a 3G mobile switching centre 26 and associated visitor location register (MSC/VLR) allocated in the circuit-switched voice core for the purpose of routing voice calls and text messages to a device over the 3G network when its primary attachment is via a 4G access network. In order to allow the MME in the 4G network to control the attach process to the 3G network, a mapping 27 is needed between the tracking areas and location areas of the two different networks. The mapping itself is held by the MME 12, and is normally only used when initiating a dual attach 24, to get the IMSI attach onto the right MSC 26. The user is not attached to the 3G radio access network (RAN), but there is a binding for it in an MSC 26 in the Circuit Switched Core so that the 3G network records that the device is on 4G (and which MME it is attached to) so that it can respond to a fallback request if a circuit-switched connection is subsequently required, as these cannot be handled by the 4G system.US 2010/080171 describes a communications system of this type.

Conventionally such a mapping 27 is maintained through a manual input 28 by the respective operators. However, as user-provided microcells (femtocells) become more common, whose locations are more dynamic than traditional fixed base stations, maintaining an accurate mapping between the service areas in the two technologies can be challenging. In particular, the respective networks may belong to different operators, and therefore sharing up-to-date information between the operators may not always be possible because of commercial as well as technical constraints. Moreover, privately-owned but publicly-accessible small base stations (femtocells) are coming into use which, unlike conventional macrocells and microcells, are not under the direct control of the network operator and may be switched on or off, or moved, as their owners require. It is not practical to maintain a mapping table manually in such circumstances. Moreover, in a full national roaming model, the 3G Mobile Switching Centre through which the user terminal is connected may be in a different network to the 4G mobile management entity (MME) managing the connection. Maintaining the mapping data is therefore becoming more difficult. An incorrect mapping will result in incoming 3G traffic to the terminal having to be re-routed from MSC recorded at handover to another base station and MSC, and can result in extended call set-up times that may lead to the failure of the connection attempt.

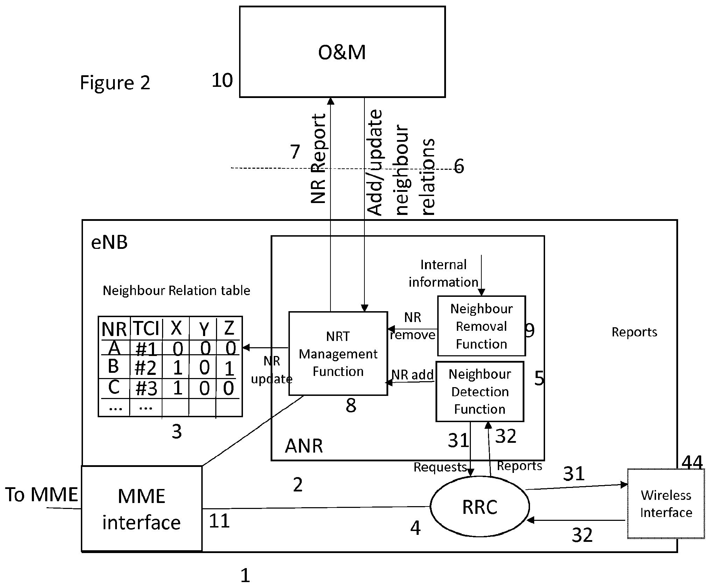

Once the user terminal has been attached to both the 3G and 4G networks, handovers and location updates take place in the two networks independently, managed by using neighbour lists held locally by the base stations of the respective networks to identify candidate base stations to which handover may be made. These neighbour lists can change over time, for reasons such as technical failure and later repair of a fixed station, or a privately owned station (femtocell) being temporarily installed, and later removed again. Figure 2 illustrates a base station operating a known process by which these neighbour lists are dynamically maintained up to date in the 4G (LTE) network by having mobile terminals report to each base station the identities of any other base stations they can detect. This will be discussed in more detail later, but briefly, the base stations instruct user terminals in connected mode to search for a list of frequencies, measure signal strength and report on found cells, and the base station can also subsequently ask for additional information for purposes such as automatic neighbour relation (ANR). The base station can make handover decisions based on the reports received from the UE if, for instance, the current signal strength is low and there is a neighbour that can better serve that cell.

It is a feature of the 4G system that the mobile terminals report neighbour data for both LTE (4G) and UTRAN (3G), as well as GERAN ("GSM EDGE Radio Access Network" 2G) if instructed to do so.. The eNodeB (evolved node B, or base station) receives a response from the UE containing Local Area Identity and Public Land Mobile Network ID (amongst other information) and forwards the relevant information to the Mobility management entity (MME).

Embodiments of the present invention make use of this simultaneous detection of both types of neighbour to identify the Location Areas contained within or nearby the current Tracking Area, and thereby to control a dynamic updating process for the mapping between these areas that is used in the initial attach process when a terminal first connects to the network when it is switched on or comes into range of a base station.

According to a first aspect of the invention, there is provided a mobile telecommunications system comprising a plurality of base stations forming part of a first network operating according to a first protocol, a plurality of base stations forming part of a second network operating according to a second protocol, and a mobile management entity (MME), in which the MME stores a mapping between geographical areas managed by a set of respective first network control elements in the first infrastructure and geographical areas managed by a set of respective second network control elements in the second infrastructure, the mapping being suitable for supporting mobile terminals, having made an association with one of the set of first network control elements, to make an association with one of the set of second network control elements selected according to the mapping,
characterised in that at least one of the base stations of the first network is arranged to request and receive neighbour data from a mobile terminal currently in communication with the base station, the neighbour data relating to base stations of the second network that can be detected by the mobile terminal, and to forward the neighbour data to the MME, and the MME is arranged to update the mapping between the base station locations in accordance with the location updates it receives from the terminal.

The base stations may be arranged to transmit requests to mobile terminals to scan for neighbouring base stations operational in the first and second communications networks. The mapping may be used by the MME to select a server in the second network with which an attach procedure is to be initiated when an attachment to the first network is initiated by a user terminal. In the embodiment to be described, the server in the second network is used for communication with mobile terminals when a service is required for which the first network is unsuitable.

According to a second aspect of the invention, there is provided a mobility management entity (MME) for a telecommunications system, comprising a store for a mapping between geographical areas managed by a set of respective first network control elements controlling base stations of a first network operating according to a first protocol and geographical areas managed by a set of respective second network control elements controlling base stations of a second network operating according to a second protocol, the mapping being suitable for supporting a dual attach system to allow mobile terminals, having made an association with one of the first network control elements, to make an association with one of the set of second network control elements selected according to the mapping,
characterised in that the MME is arranged to receive, from a base station of the first network, neighbour data relating to base stations of the second network, and is arranged to maintain the mapping between the respective geographical areas by updating it in accordance with the neighbour data it receives.

Some embodiments of the invention also provide a base station for a first mobile communications network arranged to communicate with mobile communications terminals under the control of a network management system, characterised by being arranged to receive neighbour data from such mobile communications terminals relating to base stations operating on a second mobile communications network, and arranged to transmit signals to the network management system to communicate the neighbour data relating to the base stations operating on the second mobile communications network in response to changes in that data.

According to a third aspect of the invention, there is provided a method of operating a mobile communications system, in which:
a mobile terminal in communication with a base station of the mobile communications system detects one or more neighbour base stations of a second mobile communications system,
the mobile terminal transmits data to the base station relating to the neighbour base stations
characterised in that the base station is responsive to changes in the neighbour data by transmitting data relating to the neighbour base stations to a network management processor controlling the mobile communications system,
the network management processor maintains a mapping data store associating the base station with the neighbour base stations.

This invention provides a mechanism to update a TA/LA mapping table in real time based on the information received by the base stations and forwarded to the mobility management entity (MME)

Embodiments of this invention use neighbour cell information known by the ANR (automatic neighbour relation) function in the eNodeB to update the Tracking/Location area mappings used by the MME to support functions such as the dual attachment process required for Circuit-Switched Fallback. Maintenance of an up to date mapping allows an MSC server to identify the correct Local area on initial attachment, avoiding the need to re-allocate the user, and therefore the call, from one mobile switching centre (MSC) to another during the fallback process, and allowing a reduction in call set up times

The inventive principle can be used to generate mappings between more than two base station networks, each operating on different infrastructures. Thus mappings between neighbour cell information can be overlaid for several different infrastructures by comparing neighbour lists from mobile terminals capable of connection to various combinations of such infrastructures. This allows the management of inter-network handovers between mobile units capable of connection to the same, or other, combinations of those infrastructures. To take a simple example, if two mobile units capable respectively of connection to networks A and B, and A and C, provide neighbour list information to the MME, a mapping between the three networks A, B and C can be provided, which can then be used to manage fallback of a mobile unit between networks B and C.

An embodiment of the invention will now be described with reference to the drawings, in which:
Figure 1 is a schematic representation of a mobile management entity configured to operate according to the invention, together with information flows that take place during operation of the invention;
Figure 2 is a schematic representation of a base station and associated network management system;
Figure 3 is a schematic representation of a network including the elements depicted in Figures 1 and 2, indicating the information flows taking place during operation of the process of the invention.

This embodiment makes use of several functions defined in the relevant standards, in particular 3GPP **Automatic Neighbour relations (TS 36.300: Section 22.3.2a).** This will not be discussed in detail, except where necessary to the understanding of the invention.

Figure 1 is a schematic representation of a mobile management entity (MME), indicating the various functional elements which co-operate to perform the process of the invention. The individual functions elements will typically be embodied in software running on one or more processors, and elements not relevant to the inventive concept have been omitted.

The mobile management entity (MME) 12 comprises a control interface 20 which communicates with the various base stations (eNodeB) under its control, and conventionally controls functions such as handover, call routing etc, as well as the attach processes 22, 24, 25 that take place when a terminal initially makes contact 21 with a network, and associated data stores 23, 27 and which have already been discussed. For clarity, Figure 1 only depicts functional elements that are relevant to the understanding of the present invention, with dashed lines indicating conventional functional elements and full lines indicating additional functions. It will be understood that any or all of these functions may be embodied in software running on one or more data carriers and controlling a general-purpose computer.

Figure 2 has already been briefly discussed. It depicts a base station 1 (known in the 4G technology as an evolved Node B, or eNB) which is the means by which mobile terminals make wireless communication contact with the underlying network infrastructure. It will be understood that it has a central processor to coordinate the operation of the other elements, a memory, handover control functions, and an interface for communications with the wireless interface units under its control, and through them to the user terminals currently attached to those base stations. These elements are conventional and are omitted from the diagram as they will not be discussed in detail. The eNB 1 also has an operation interface 11 with a controlling mobile management entity (MME) which controls call handling to and from the base station. It will also be understood that the individual functional elements depicted herein will typically be embodied in software running on one or more processors.

The base station 1 operates an automatic neighbour recognition (ANR) function 2, which is used to maintain a neighbour relation table 3. This maintains information relating to base stations which are (or, in practice, have recently been) in communication range of nearby user terminals.

A base station radio resource control function 4 manages a wireless interface 44 with the user terminals which are in communication with the base station.

As shown in Figure 2, The ANR function 2 resides in the eNodeB 1. For each cell that the eNodeB controls, the eNodeB maintains a Neighbour relation table 3, containing a Target Cell Identifier (TCI), which identifies each neighbouring cell A, B, C, and a number of attributes X, Y, Z of those cells. The ANR function 2 allows the network operation and management system 10 to manage the Neighbour Relation Table (NRT) 3 through an NRT management function 8.

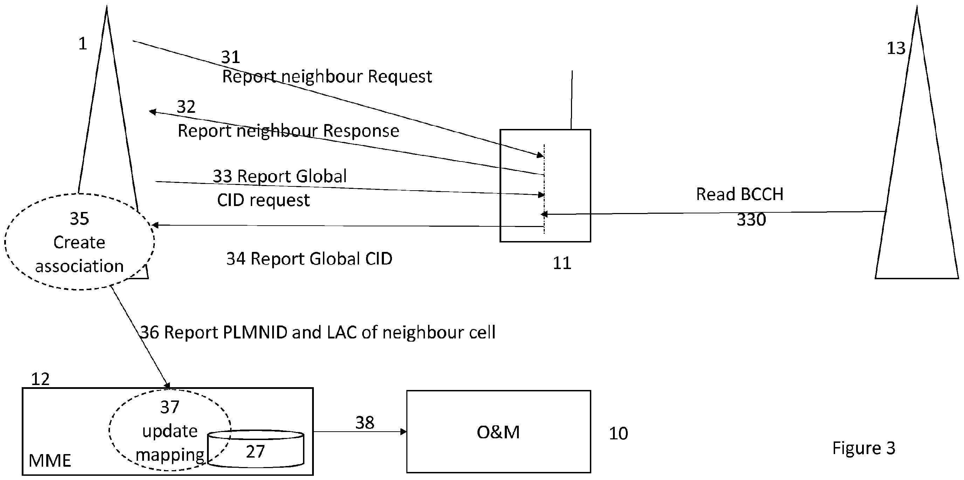

As part of the ANR function standardised in TS 36.300 22.3.2a, the Neighbour Detection Function 5 identifies new neighbours from reports received from mobile terminals through the wireless interface 44 and adds them to the NRT 3. During connected mode, the eNodeB transmits instructions 31 by way of the wireless interface 44 to connected user terminals to perform measurements and detect cells on other RATs/frequencies (see also Figure 3). The terminals respond by transmitting reports 32 relating to the cells they detect. When the eNodeB receives such reports it updates its Neighbour Relation Table 3. From time to time the operation and management system 10 transmits requests 6 to the eNodeB for updates to the neighbour relations, and the NRT management system 8 responds with updated information 7 on the content of the neighbour relation table 3. The ANR also contains a Neighbour Removal Function 9 which removes outdated entries in the neighbour relation table automatically, for example if a particular neighbour has been absent from several recent neighbour reports.

In this embodiment of the invention, the MME 12 uses neighbour data 32 retrieved from the mobile terminals attached to each eNodeB 1 under its control to maintain its mapping table 27. As shown in Figure 1, the MME 12 incorporates a neighbour data retrieval function 15 which transmits requests 30 to the eNodeBs to generate reports 36 which can then be used to identify neighbour data 13, 14 for the two networks, and identify respective local areas and tracking areas (17, 18) which than be used as inputs to a mapping process 18 to update the mapping 27 used for the dual attach process 24. In some embodiments, the NRT management function 8 is modified to transmit neighbour relation updates 36 to the MME autonomously, instead of waiting for instructions 30 from the MME.

Figure 3 depicts an updating process performed in an embodiment of the invention. The network elements taking part in the process are an LTE base station (eNodeB) 1, a mobile management entity (MME) 10, a dual-mode mobile terminal 11 and a UTRAN base station 13. The initial interactions 31, 32, 33, 330, 34, 35 in this embodiment operate according to the standard 3GPP TS 36.300 22.3.2a (*Automatic Neighbour Relation Function in Case of Detection of a UTRAN ce*//) steps 1 to 5, and accordingly neither the mobile terminal 11 nor the detected base station 13 require modification.

As described above, each cell contains an Inter-Frequency Search list, containing all frequencies to be searched. During connected mode, the eNodeB 1 can transmit a request 31 to a UE 11 to perform measurements and detect cells on other RATs/frequencies. The UE returns a report 32 indicating the PCI (protocol control information) of the detected cells in the target RATs/frequencies (step 32). For a UTRAN Frequency division duplex (FDD) cell the PCI is defined by the carrier frequency and the Primary Scrambling Code (PSC). For a UTRAN time division duplex cell, the PCI is defined by the carrier frequency and the cell parameter ID.. For a GERAN cell the parameters are the Band Indicator + base staion identity code (BSIC) + and broadcast control channel absolute radio frequency channel number (BCCH ARFCN), and for a CDMA2000 code division multiple access cell, and by the pseudo-random noise (PN) Offset.

When the eNodeB 1 receives UE reports containing PCIs of cell(s), the eNodeB transmits an instruction (33) to the UE, using the newly discovered PCI as parameter, to read further data broadcast (330) by the target cell 13. Specifically, for GERAN detected cells the UE reads the cell global identity (CGI) and the routing area code (RAC) of the detected neighbour cell. For UTRAN cells it reads the CGI, local area code (LAC), RAC and all broadcasted public land mobile network identities (PLMN-IDs). For CDMA cells it reads the CGI. For the inter-frequency case, the eNodeB instructs the UE, using the newly discovered PCI as parameter, to read the evolved cell global identifier (ECGI), tracking area code (TAC) and all available PLMN ID(s) of the inter-frequency detected cell. The UE ignores transmissions from the serving cell while finding the requested information transmitted in the broadcast channel of the detected inter-system/inter-frequency neighbour cell. To do so, the eNodeB may need to schedule appropriate idle periods to allow the UE to read the requested information from the broadcast channel of the detected inter-RAT/inter-frequency neighbour cell.

After the UE has read the requested information in the new cell, it reports the detected data (step 34) to the serving cell eNodeB 1. In the inter-frequency case, the UE reports the ECGI, the, tracking area code and all PLMN-ID(s) that have been detected. If the detected cell is a CSG or hybrid cell, the UE also reports the CSG ID to the serving cell eNodeB.

In conventional use, as required by the standard TS36.300 22.3.2a, the eNodeB 1 uses this data to maintain its own inter-RAT/inter-frequency Neighbour Relation Table 3 (step 35).

In this embodiment of the invention, data is retrieved from the neighbour relation table 3 and delivered to the neighbour data processor 29 of the MME 10 by the eNodeB 1 (step 36). This data, specifically the location area code (LAC) and associated public land mobile network identity (PLMNID) code for each base station 13 detected, are used by the neighbour data processor to update data in the mapping database 27 (step 37). The mapping follows two processes. Firstly, a base station identified as having two or more capabilities is recorded in both the location databases 13, 14, regardless of which capability the mobile terminal is using. Secondly, two or more base stations using a given capability, and both in range of a given mobile terminal, can be identified as neighbours.

The mapping 27 thus generated can then be used in the known way to facilitate the dual attachment process 24 to enable attachment to the serving 4G cell (Packet Switching) and to the circuit switched core for voice and SMS, to choose the right location area should an incoming voice call later require to be routed onto the appropriate MSC. The MME 12 may update the Operation and management system 10, to allow the O&M system 10 to modify existing TAC allocations and push those out to the eNodeBs 1.

The mapping process 18 itself may simply record which base stations in the two respective systems have been reported as being in range of a given mobile terminal in response to neighbour report update. More complex processing may be used to provide a more reliable mapping between the LA and TA domains.

For example, the process may monitor whether the device fallback process, using an attach 25 based on data retrieved from the mapping store 27 fell back onto a 3G base station belonging to the LA stored in the database, and modify a preference rating of the mappings accordingly. The mapping process 18 may also monitor whether a particular 3G neighbour is only reported intermittently in the same area as a particular 4G, which might suggest either that it is intermittent in use, near the edge of the coverage area of the 4G base station, or the area of overlap is rarely visited by mobile terminals, and in any case that there is a low statistical probability of devices being in a particular Location Area located inside or close to current Tracking Area when a call comes in and fall-back occurs. This will allow an appropriate selection to be made of which local area to be mapped to a given tracking area.

## Claims

1. A mobile telecommunications system comprising a plurality of base stations (1) forming part of a first network operating according to a first protocol, a plurality of base stations (31) forming part of a second network operating according to a second protocol, and a mobile management entity MME (12), in which the MME is adapted to store a mapping (37) between geographical areas managed by a set of respective first network control elements in the first network and geographical areas managed by a set of respective second network control elements in the second network, the mapping being suitable for supporting mobile terminals (11), having made an association with one of the set of first network control elements, to make an association with one of the set of second network control elements selected according to the mapping,
**characterised in that** at least one of the base stations (1) of the first network is arranged to request and receive neighbour data from a mobile terminal (11) currently in communication with the base station, the neighbour data relating to base stations 13 of the second network that can be detected by the mobile terminal, and arranged to respond to changes in the neighbour data by transmitting neighbour data relating to the base stations (13) of the second network to the MME (12), and the MME is arranged to update the mapping (37) between the respective geographical areas in accordance with the changes in neighbour data it receives.

2. A mobile telecommunications system according to Claim 1, wherein base stations (1) are arranged to transmit requests to mobile terminals (11) to scan for neighbouring base stations (13) operational in the first and second communications networks.

3. A mobile telecommunications system according to Claim 1 or Claim 2, wherein the mapping is used by the MME to select a server in the second network with which an attach procedure is to be initiated when an attachment to the first network is initiated by a user terminal (11) .

4. A mobile telecommunications system according to Claim 3, wherein the server in the second network is used for communication with mobile terminals when a service is required for which the first network is unsuitable.

5. A mobility management entity MME (12) for a telecommunications system, comprising a store for a mapping (37) between geographical areas managed by a set of respective first network control elements controlling base stations (1) of a first network operating according to a first protocol and geographical areas managed by a set of respective second network control elements controlling base stations (13) of a second network operating according to a second protocol, the mapping being suitable for supporting a dual attach system to allow mobile terminals, having made an association with one of the first network control elements, to make an association with one of the set of second network control elements selected according to the mapping,
**characterised in that** the MME is arranged to receive, from a base station (1) of the first network, neighbour data relating to base stations (13) of the second network, and is arranged to update the mapping between the respective geographical areas by updating it in accordance with the neighbour data it receives.

6. A mobility management entity according to Claim 5, wherein the mapping is used by the MME to select a server in the second network with which an attach procedure is to be initiated when an attachment to the first network is initiated by a user terminal.

7. A mobility management entity according to Claim 6, wherein the server in the second network is selected for communication with mobile terminals when a service is required for which the first network is unsuitable.

8. A base station (1) for a first mobile communications network arranged to communicate with mobile communications terminals (11) under the control of a mobility management entity, MME (12), **characterised by** being arranged to receive neighbour data from such mobile communications terminals relating to base stations operating on a second mobile communications network, and arranged (5, 9) to respond to changes in that data by transmitting signals to the MME (12) to communicate the neighbour data relating to the base stations operating on the second mobile communications network.

9. A base station according to Claim 8, arranged to transmit a request to a mobile terminal (11) to scan for neighbouring base stations operational in the first and second communications networks.

10. A method of operating a mobile communications system, in which:
a mobile terminal (11) in communication with a base station (1) of a first network detects one or more neighbour base stations (13) of a second network
the mobile terminal transmits data to the base station (1) relating to the neighbour base stations (13) of the second network,
**characterised in that** the base station is responsive to changes in the neighbour data by transmitting data relating to the neighbour base stations to a mobility management entity, MME, (12) controlling the mobile communications system, and
the MME (12) updates a mapping (37) between geographical areas in the first network and geographical areas in the second network in accordance with the neighbour data it receives.

11. A method according to Claim 10, wherein the mapping data (37) is used during an attach process of mobile terminals to a server of the first network (12) to select a server in the second network (13) and initiate an attach procedure of said mobile terminals to the server in the second network so identified.

12. A method according to Claim 11, wherein the server in the second network (13) is used for communication with the mobile terminals (11) for services for which the first network (1) is unsuitable.

13. A method according to Claim 10, wherein the mobile terminal (11) scans for neighbours in response to request from base station.

14. A method according to Claim 10 in which the first network operates according to a packet switched protocol.

15. A method according to Claim 10 or Claim 14 in which the second network operates according to a circuit switched protocol

## Patentansprüche

1. Mobiltelekommunikationssystem, umfassend eine Vielzahl von Basisstationen (1), die einen Teil eines ersten Netzwerks bilden, das gemäß einem ersten Protokoll betrieben wird, eine Vielzahl von Basisstationen (31), die einen Teil eines zweiten Netzwerks bilden, das gemäß einem zweiten Protokoll betrieben wird, und eine Mobilmanagementeinheit (MME) (12), wobei die MME dazu vorgesehen ist, eine Zuordnung (37) zwischen geografischen Bereichen, die von einem Satz von jeweiligen ersten Netzwerksteuerelementen in dem ersten Netzwerk verwaltet werden, und geografischen Bereichen, die von einem Satz von jeweiligen zweiten Netzwerksteuerelementen in dem zweiten Netzwerk verwaltet werden, zu speichern, wobei die Zuordnung geeignet ist, um mobile Endgeräte (11), die eine Verbindung mit einem von dem Satz von ersten Netzwerksteuerelementen hergestellt haben, dabei zu unterstützen, eine Verbindung mit einem von dem Satz der zweiten Netzwerksteuerelemente, die gemäß der Zuordnung ausgewählt werden, herzustellen,
**dadurch gekennzeichnet, dass** mindestens eine der Basisstationen (1) des ersten Netzwerks dazu vorgesehen ist, Nachbardaten von einem mobilen Endgerät (11) anzufordern und zu empfangen, das aktuell mit der Basisstation in Kommunikation ist, wobei sich die Nachbardaten auf Basisstationen (13) des zweiten Netzwerks beziehen, das von dem mobilen Endgerät erkannt werden kann, und dazu vorgesehen ist, auf Änderungen der Nachbardaten durch Übertragen der Nachbardaten, die sich auf die Basisstationen (13) des zweiten Netzwerks beziehen, an die MME (12) zu reagieren, und die MME dazu vorgesehen ist, die Zuordnung (37) zwischen den jeweiligen geografischen Bereichen in Übereinstimmung mit den Änderungen der Nachbardaten, die sie empfängt, zu aktualisieren.

2. Mobiltelekommunikationssystem nach Anspruch 1, wobei die Basisstationen (1) dazu vorgesehen sind, um Anforderungen an mobile Endgeräte (11) zu übertragen, um eine Abtastung nach benachbarten Basisstationen (13) durchzuführen, die in dem ersten und dem zweiten Kommunikationsnetzwerk betrieben werden.

3. Mobiltelekommunikationssystem nach Anspruch 1 oder Anspruch 2, wobei die Zuordnung von der MME verwendet wird, um einen Server in dem zweiten Netzwerk auszuwählen, mit dem eine Anmeldeprozedur eingeleitet werden soll, wenn von einem Benutzerendgerät (11) eine Anmeldung bei dem ersten Netzwerk eingeleitet wird.

4. Mobiltelekommunikationssystem nach Anspruch 3, wobei der Server in dem zweiten Netzwerk zur Kommunikation mit mobilen Endgeräten verwendet wird, wenn ein Dienst erforderlich ist, für den das erste Netzwerk ungeeignet ist.

5. Mobilitätsmanagementeinheit (MME) (12) für ein Telekommunikationssystem, umfassend einen Speicher für eine Zuordnung (37) zwischen geografischen Bereichen, die von einem Satz von jeweiligen ersten Netzwerksteuerelementen verwaltet werden, die Basisstationen (1) eines ersten Netzwerks steuern, das gemäß einem ersten Protokoll betrieben wird, und geografischen Bereichen, die von einem Satz von jeweiligen zweiten Netzwerksteuerelementen verwaltet werden, die Basisstationen (13) eines zweiten Netzwerks steuern, das gemäß einem zweiten Protokoll betrieben wird, wobei die Zuordnung geeignet ist, ein duales Anmeldesystem zu unterstützen, um es mobilen Endgeräten zu ermöglichen, die eine Verbindung mit einem der ersten Netzwerksteuerelemente hergestellt haben, eine Verbindung mit einem von dem Satz der zweiten Netzwerksteuerelemente, die gemäß der Zuordnung ausgewählt werden, herzustellen,
**dadurch gekennzeichnet, dass** die MME dazu vorgesehen ist, von einer Basisstation (1) des ersten Netzwerks Nachbardaten zu empfangen, die sich auf Basisstationen (13) des zweiten Netzwerks beziehen, und dazu vorgesehen ist, die Zuordnung zwischen den jeweiligen geografischen Bereichen durch ihre Aktualisierung in Übereinstimmung mit den Nachbardaten, die sie empfängt, zu aktualisieren.

6. Mobilitätsmanagementeinheit nach Anspruch 5, wobei die Zuordnung von der MME verwendet wird, um einen Server in dem zweiten Netzwerk auszuwählen, mit dem eine Anmeldeprozedur eingeleitet werden soll, wenn von einem Benutzerendgerät eine Anmeldung bei dem ersten Netzwerk eingeleitet wird.

7. Mobilitätsmanagementeinheit nach Anspruch 6, wobei der Server in dem zweiten Netzwerk zur Kommunikation mit mobilen Endgeräten ausgewählt wird, wenn ein Dienst erforderlich ist, für den das erste Netzwerk ungeeignet ist.

8. Basisstation (1) für ein erstes Mobilkommunikationsnetzwerk, die dazu vorgesehen ist, mit den mobilen Kommunikationsendgeräten (11) unter der Steuerung einer Mobilitätsmanagementeinheit (MME) (12) zu kommunizieren,
**dadurch gekennzeichnet, dass** sie dazu vorgesehen ist, Nachbardaten von solchen mobilen Kommunikationsendgeräten zu empfangen, die sich auf Basisstationen beziehen, die in einem zweiten Mobilkommunikationsnetzwerk betrieben werden, und dazu vorgesehen (5, 9) ist, auf Änderungen dieser Daten durch Übertragen von Signalen an die MME (12) zu reagieren, um die Nachbardaten, die sich auf die Basisstationen beziehen, die in dem zweiten Mobilkommunikationsnetzwerk betrieben werden, zu kommunizieren.

9. Basisstation nach Anspruch 8, die dazu vorgesehen ist, eine Anforderung an ein mobiles Endgerät (11) zu übertragen, um eine Abtastung nach benachbarten Basisstationen durchzuführen, die in dem ersten und dem zweiten Kommunikationsnetzwerk betrieben werden.

10. Verfahren zum Betreiben eines Mobilkommunikationssystems, wobei:
ein mobiles Endgerät (11), das mit einer Basisstation (1) eines ersten Netzwerks in Kommunikation ist, eine oder mehrere benachbarte Basisstationen (13) eines zweiten Netzwerks erkennt,
das mobile Endgerät Daten an die Basisstation (1) überträgt, die sich auf die benachbarten Basisstationen (13) des zweiten Netzwerks beziehen,
**dadurch gekennzeichnet, dass** die Basisstation auf Änderungen in den Nachbardaten reagiert, indem sie Daten, die sich auf die benachbarten Basisstationen beziehen, an eine Mobilitätsmanagementeinheit (MME) (12) überträgt, die das Mobilkommunikationssystem steuert, und
die MME (12) eine Zuordnung (37) zwischen geografischen Bereichen in dem ersten Netzwerk und geografischen Bereichen in dem zweiten Netzwerk in Übereinstimmung mit den Nachbardaten aktualisiert, die sie empfängt.

11. Verfahren nach Anspruch 10, wobei die Zuordnungsdaten (37) während eines Anmeldevorgangs von mobilen Endgeräten an einem Server des ersten Netzwerks (12) verwendet werden, um einen Server in dem zweiten Netzwerk (13) auszuwählen und eine Anmeldeprozedur der mobilen Endgeräte bei dem auf diese Weise identifizierten Server in dem zweiten Netzwerk einzuleiten.

12. Verfahren nach Anspruch 11, wobei der Server in dem zweiten Netzwerk (13) zur Kommunikation mit den mobilen Endgeräten (11) für Dienste verwendet wird, für die das erste Netzwerk (1) ungeeignet ist.

13. Verfahren nach Anspruch 10, wobei das mobile Endgerät (11) als Reaktion auf eine Anforderung von der Basisstation eine Abtastung nach Nachbarn durchführt.

14. Verfahren nach Anspruch 10, bei dem das erste Netzwerk gemäß einem paketvermittelten Protokoll betrieben wird.

15. Verfahren nach Anspruch 10 oder 14, bei dem das zweite Netzwerk gemäß einem leitungsvermittelten Protokoll betrieben wird.

## Revendications

1. Système de télécommunication mobile, comprenant une pluralité de stations de base (1) faisant partie d'un premier réseau fonctionnant selon un premier protocole, une pluralité de stations de base (31) faisant partie d'un deuxième réseau fonctionnant selon un deuxième protocole et une entité de gestion mobile, MME, (12), la MME étant adaptée à stocker une mise en correspondance (37) entre des zones géographiques gérées par un ensemble de premiers éléments de commande de réseau respectifs dans le premier réseau et des zones géographiques gérées par un ensemble de deuxièmes éléments de commande de réseau respectifs dans le deuxième réseau, la mise en correspondance étant apte à aider des terminaux mobiles (11), ayant formé une association avec l'un de l'ensemble de premiers éléments de commande de réseau, à former une association avec l'un de l'ensemble de deuxièmes éléments de commande de réseau sélectionné selon la mise en correspondance,
**caractérisé en ce qu'**au moins une des stations de base (1) du premier réseau est conçue pour solliciter et recevoir des données de voisinage depuis un terminal mobile (11) actuellement en communication avec la station de base, les données de voisinage étant relatives à des stations de base (13) du deuxième réseau détectables par le terminal mobile, et conçue pour réagir à des modifications des données de voisinage en transmettant à la MME (12) des données de voisinage relatives aux stations de base (13) du deuxième réseau, et la MME est conçue pour mettre à jour la mise en correspondance (37) entre les zones géographiques respectives en accord avec les modifications de données de voisinage qu'elle reçoit.

2. Système de télécommunication mobile selon la revendication 1, dans lequel des stations de base (1) sont conçues pour transmettre à des terminaux mobiles (11) des requêtes de balayage à la recherche de stations de base voisines (13) fonctionnelles dans les premier et deuxième réseaux de communication.

3. Système de télécommunication mobile selon la revendication 1 ou la revendication 2, dans lequel la mise en correspondance est utilisée par la MME pour sélectionner un serveur dans le deuxième réseau avec lequel déclencher une procédure de rattachement lors du déclenchement, par un terminal utilisateur (11), d'un rattachement au premier réseau.

4. Système de télécommunication mobile selon la revendication 3, dans lequel le serveur dans le deuxième réseau est utilisé pour la communication avec des terminaux mobiles lorsqu'un service, pour lequel le premier réseau est inadapté, est requis.

5. Entité de gestion de la mobilité, MME, (12) pour un système de télécommunication, comprenant une unité de stockage pour une mise en correspondance (37) entre des zones géographiques gérées par un ensemble de premiers éléments de commande de réseau respectifs commandant des stations de base (1) d'un premier réseau fonctionnant selon un premier protocole et des zones géographiques gérées par un ensemble de deuxièmes éléments de commande de réseau respectifs commandant des stations de base (13) d'un deuxième réseau fonctionnant selon un deuxième protocole, la mise en correspondance étant apte à aider un système de double rattachement à habiliter des terminaux mobiles, ayant formé une association avec l'un des premiers éléments de commande de réseau, à former une association avec l'un de l'ensemble de deuxièmes éléments de commande de réseau sélectionné selon la mise en correspondance,
la MME étant **caractérisée en ce qu'**elle est conçue pour recevoir, depuis une station de base (1) du premier réseau, des données de voisinage relatives à des stations de base (13) du deuxième réseau, et est conçue pour mettre à jour la mise en correspondance entre les zones géographiques respectives en la mettant à jour en accord avec les données de voisinage qu'elle reçoit.

6. Entité de gestion de la mobilité selon la revendications 5, dans laquelle la mise en correspondance est utilisée par la MME pour sélectionner un serveur dans le deuxième réseau avec lequel déclencher une procédure de rattachement lors du déclenchement, par un terminal utilisateur, d'un rattachement au premier réseau.

7. Entité de gestion de la mobilité selon la revendication 6, dans laquelle le serveur dans le deuxième réseau est sélectionné pour la communication avec des terminaux mobiles lorsqu'un service, pour lequel le premier réseau est inadapté, est requis.

8. Station de base (1) pour un premier réseau de communication mobile conçue pour communiquer avec des terminaux de communication mobiles (11) sous la commande d'une entité de gestion de la mobilité, MME, (12), **caractérisée en ce qu'**elle est conçue pour recevoir depuis de tels terminaux de communication mobiles des données de voisinage relatives à des stations de base fonctionnant sur un deuxième réseau de communication mobile, et conçue (5, 9) pour réagir à des modifications de ces données en transmettant des signaux à la MME (12) afin de communiquer les données de voisinage relatives aux stations de base fonctionnant sur le deuxième réseau de communication mobile.

9. Station de base selon la revendication 8, conçue pour transmettre à un terminal mobile (11) une requête de balayage à la recherche de stations de base voisines fonctionnelles dans les premier et deuxième réseaux de communication.

10. Procédé de fonctionnement d'un système de communication mobile, dans lequel :
un terminal mobile (11) en communication avec une station de nase (1) d'un premier réseau détecte une ou plusieurs stations de base voisines (13) d'un deuxième réseau,
le terminal mobile transmet à la station de base (1) des données relatives aux stations de base voisines (13) du deuxième réseau,
**caractérisé en ce que** la station de base réagit à des modifications des données de voisinage en transmettant des données relatives aux stations de base voisines à une entité de gestion de la mobilité, MME, (12) commandant le système de communication mobile, et
la MME (12) met à jour une mise en correspondance (37) entre des zones géographiques dans le premier réseau et des zones géographiques dans le deuxième réseau en accord avec les données de voisinage qu'elle reçoit.

11. Procédé selon la revendication 10, dans lequel les données de mise en correspondance (37) sont utilisées, au cours d'un processus de rattachement de terminaux mobiles à un serveur du premier réseau (12), pour sélectionner un serveur dans le deuxième réseau (13) et déclencher une procédure de rattachement desdits terminaux mobiles au serveur dans le deuxième réseau ainsi identifié.

12. Procédé selon la revendication 11, dans lequel le serveur dans le deuxième réseau (13) est utilisé pour la communication avec les terminaux mobiles (11) dans le cadre de services pour lesquels le premier réseau (1) est inadapté.

13. Procédé selon la revendication 10, dans lequel le terminal mobile (11) effectue un balayage à la recherche de voisines en réaction à une requête de station de base.

14. Procédé selon la revendication 10, dans lequel le premier réseau fonctionne selon un protocole à commutation de paquets.

15. Procédé selon la revendication 10 ou la revendication 14, dans lequel le deuxième réseau fonctionne selon un protocole à commutation de circuits.
